# EUROPÄISCHE PATENTSCHRIFT

(11) **EP 0 599 060 B1**
(45) Veröffentlichungstag und Bekanntmachung des Hinweises auf die Patenterteilung: **31.01.1996**
(21) Anmeldenummer: 93117057.5
(22) Anmeldetag: 21.10.1993
(51) Int. Cl.: F01N 3/20, F01N 3/02, F01N 9/00, F01N 3/18, F01N 3/22

(54) **Brennersystem zur Abgasentgiftung bzw. -reinigung einer Brennkraftmaschine**
Burner system for exhaust gas detoxification or purification for an internal combustion engine
Brûleur de dépollution ou de purification d'un moteur à combustion interne

(30) Priorität: 20.11.1992 DE 4239079
(43) Veröffentlichungstag der Anmeldung: 01.06.1994
(73) Patentinhaber: PIERBURG GMBH, D-41460 Neuss (DE)
(72) Erfinder: Härtel, Günter, D-41470 Neuss (DE); Schürfeld, Armin, D-40670 Meerbusch (DE); Röttges, Riedel, D-47918 Tönisvorst (DE); Hullmann, Matthias, D-41564 Kaarst (DE)

(56) Entgegenhaltungen:
- DE-A- 3 835 939
- US-A- 3 203 168
- US-A- 4 604 868
- US-A- 4 651 524
- PATENT ABSTRACTS OF JAPAN vol. 008, no. 143 (M-306)(1580) 4. Juli 1984 & JP-A-59 041 620 (TOYO KOGYO) 7. März 1984

## Beschreibung

Die Erfindung betrifft ein Brennersystem zur Abgasentgiftung bzw. -reinigung einer Brennkraftmaschine nach dem Oberbegriff des Anspruchs 1.

Entscheidend für die Schadstoffemission einer Brennkraftmaschine sind die ersten ein bis zwei Minuten nach dem Starten bei kalter Maschine.

In dieser Phase werden ca. 70-80% der gesamten Emission von HC und CO ausgestoßen. Da in diesem Zeitraum der Katalysator noch keine Betriebstemperatur aufweist, emittiert der Motor quasi die Rohemission.

Es gibt verschiedene Möglichkeiten, diesen Zeitraum zu überbrücken bzw. zu verkürzen, zum Beispiel dadurch, daß der Katalysator durch ein Brennersystem beheizt wird, wie es für ein Abgasreinigungssystem in der US-A-4,604,868 offenbart ist. Dieses weist bereits auf den Druck in der Brennkammer reagierende Brennstoff- und Brennluftdruckregler auf.

Aus der PIERBURG-Produktinformation 'Elektrische Sekundärluftgebläse', Nr. 5/400-151.01, 9/91, veröffentlicht auf der Internationalen Automobil Ausstellung, Frankfurt/Main, 1991, ist ein Sekundärluftsytem entnehmbar, das bei einer Brennkraftmaschine die Einblasung von Sekundärluft in die Abgaskrümmer während der kalten, noch nicht betriebsbereiten Phase des Katalysators vorsieht.

Hierdurch wird erreicht, daß die Schadstoffe CO und HC, die vermehrt in der Kaltphase durch eine motorseitige Luftzahl von Lambda < 1 entstehen, abgesenkt werden und dem Katalysator Wärme zugeführt wird zur Erreichung schnellerer Betriebsbereitschaft nach dem Kaltstart. Das Sekundärlufteinblassystem besteht aus einem Luftgebläse, einem oder mehreren Rückschlagventilen und einem Abschaltventil.

Überlegungen, wie die Betriebsbereitschaft ausgehend von diesem Stand der Technik noch schneller erreicht werden kann, führten im Zusammenhang mit diesem Sekundärluftsystem zu dem in der nicht vorveröffentlichten Patentanmeldung DE-P 41 32 814.0 angegebenen Verfahren, bei dem der Katalysator durch einen mit Brennstoff der Brennkraftmaschine betriebenen Brenner beheizt wird, wobei dem Brennersystem Verbrennungsluft bereitgestellt wird, die von einem Luftgebläse des Sekundärluftsystems gefördert wird.

Je nach Einsatzgebiet eines Brennersystems im Abgas- und/oder Saugsystem einer Brennkraftmaschine bestehen unterschiedliche Anforderungen und Abhängigkeiten der Betriebsparameter, wie z.B. dem Druck in der Brennkammer des Brennersystems, die zur Beeinträchtigung der Brennerfunktion führen können.

Es ist daher Aufgabe der vorliegenden Erfindung, zur Erfüllung der jeweiligen Anforderungen und zur Vermeidung der störenden Einflüsse Maßnahmen aufzufinden, mit denen ein Brennersystem für diverse Einsatzgebiete betrieben werden kann. Diese Aufgabe ist durch die im Kennzeichen des Patentanspruchs 1 angegebenen Merkmale gelöst worden. Hinsichtlich der konstruktiven Ausgestaltung der Brennerkammer selbst und der Steuer-/Regelorgane für die Zuführung der Brennluft und des Brennstoffes werden vorteilhafte Weiterbildungen des Gegenstandes nach Anspruch 1 in den Unteransprüchen angegeben.

Mit dem erfindungsgemäßen Brennersystem kann die nach dem Kaltstart der Brennkraftmaschine auftretende Emission von HC und CO erheblich verringert bzw. deren Austrittszeit verkürzt werden.

Das Brennersystem ist auch einsetzbar für eine Abgasreinigungseinrichtung für Diesel-Brennkraftmaschinen, bestehend aus einer Filtereinrichtung zum Auffangen von Kohlenstoffpartikeln (Ruß) und aus einer Brennereinrichtung zum Abbrennen der am Filter abgelagerten Partikel, wie beispielsweise in der nicht vorveröffentlichten DE-Patentanmeldung P 42 29.103.8 angebeben ist.

Mit dem Brennersysten ist eine einfache Lösung gefunden worden, die mit geringem Bauaufwand realisierbar ist.

Ausführungsbeispiele der Erfindung sind in der Zeichnung dargestellt und werden nachfolgend beschrieben.

Diese zeigt:
Fig. 1 - ein Brennersystem für eine Katalysator-Startheizung;
Fig. 2 und 6 - Einzelheiten aus Fig. 1;
Fig. 3, 4, 5 und 7 - Abwandlungen der Ausführung nach Fig. 1.

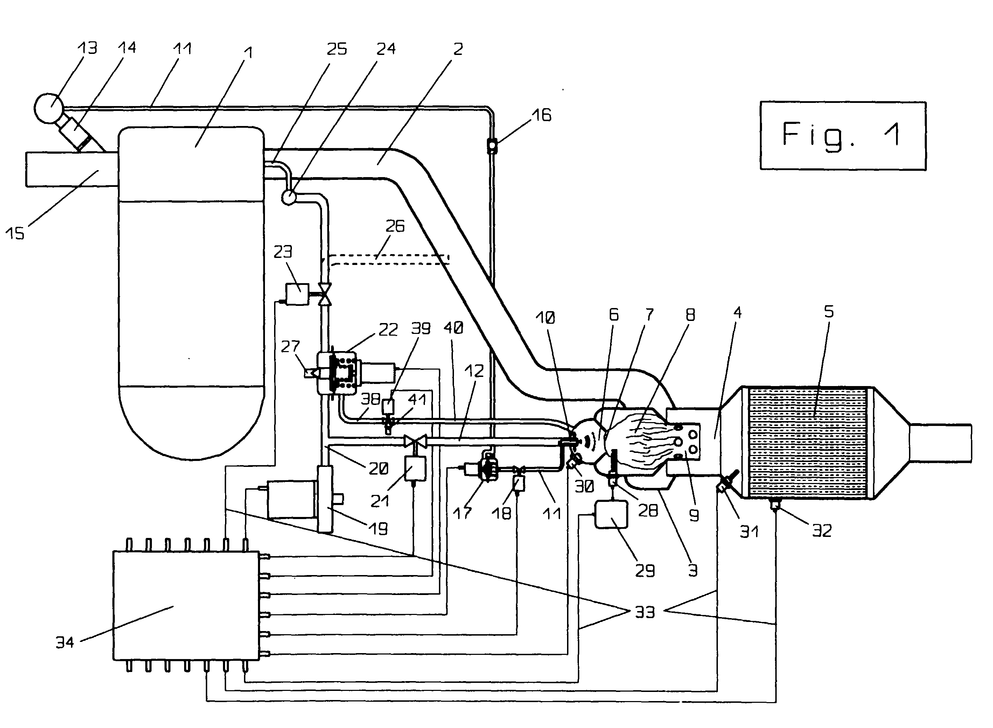

Fig.1 zeigt das Gesamtschema eines Brennersystems für den Anwendungsfall einer Katalysator-Startheizung.

Von einer Brennkraftmaschine 1 führt eine Abgasleitung 2 zu einem Brenner 3, welcher über eine Abgas-Mischstrecke 4 mit einem Katalysator 5 verbunden ist. Der Brenner 3 besteht aus einer Gemisch-Aufbereitungskammer 6, einer Gemisch-Austrittsblende 7, einer Brennkammer 8 und einem Brennkammeraustritt 9. In die Gemisch-Aufbereitungskammer 6 mündet eine Zerstäuberdüse 10, der über eine Brennstoffleitung 11 Brennstoff und über eine Brennluftleitung 12 Luft zugeführt wird.

Der Brennstoff für das Brennersystem wird einer Kraftstoff-Verteilerleitung 13 entnommen, welche Einspritzventile 14, die in Ansaugluftkanälen 15 der Brennkraftmaschine angeordnet sind, versorgt. In der Brennstoffleitung 11 sind ein Sicherheits-Absperrventil 16, ein Brennstoffregler 17 und ein Brennstoff-Absperrventil 18 angeordnet.

Die Brennluft für das Brennersystem wird von einem Sekundärluftgebläse 19 aus der Atmosphäre über einen Luftfilter (zeichnerisch nicht dargestellt) angesaugt und in eine sich verzweigende Sekundärluft-Druckleitung 20 gefördert. Die abzweigende Brennluftleitung 12 führt über ein Brennluft-Absperrventil 21 zur Zerstäuberdüse 10. Die Sekundärluft-Druckleitung 20 führt einerseits zu einem Sekundärluft-Druckregler 22 und von dort weiter zu einem Sekundärluft-Absperr- und Taktventil 23. Die Zuteilung der Sekundärluft kann alternativ entweder über eine Sekundärluft-Verteilerleitung 24 und den Zylinder-Auslaßkanälen zugeordnete Einblasröhrchen 25 in Nähe der Auslaßventile im Zylinderkopf der Brennkraftmaschine erfolgen oder über eine gestrichelt dargestellte Leitung 26 dem Sammelrohr der Abgasleitung 2 zugeteilt werden. Die im Überschuß geförderte Sekundärluft wird vom Sekundärluft-Druckregler 22 über eine Austrittsleitung 27 in die Atmosphäre abgeblasen. Um den Einfluß des Abgasgegendruckes auf die Brennluft- und Sekundärluftmenge zu vermeiden, ist der rückwärtige Membranraum des Sekundärluft-Druckreglers 22 bei Betrieb des Sekundärluftgebläses 19 über eine Referenzdruckleitung 38, ein Referenzdruck-Umschaltventil 39 und eine Abgasdruck-Leitung 40 mit einer der Brennkammern des Brenners 3, hier mit der Gemisch-Aufbereitungskammer 6, oder der Abgasleitung 2 verbunden. Bei Stillstand des Sekundärluftgebläses 19 wird der Sekundärluft-Druckregler 22 über das Referenzdruck-Umschaltventil 39 über eine Atmosphärendruck-Leitung 41 mit dem Atmosphärendruck verbunden. Zur Entflammung des Brenngemisches in der Brennkammer 8 dient eine Zündelektrode 28, welche über ein Zündmodul 29 angesteuert wird. Zur Überwachung der Brennerfunktion kann ein Flammwächter 30 im Bereich der Gemisch-Aufbereitungskammer 6 oder der Brennkammer 8 angeordnet werden. Weiterhin kann zur Erfassung des dem Katalysator 5 zugeführten Abgasgemisches unmittelbar zwischen der Abgas-Mischstrecke 4 und dem Katalysator 5 zusätzlich oder alternativ zum konventionellen Einbauort eine Lambda-Sonde 31 vorgesehen werden. Ein Temperatursensor 32 dient zur Erfassung der Katalysator-Temperatur an der Außenwand oder innerhalb des Katalysators 5. Alle Komponenten des Brennersystems sind über Anschlußleitungen 33 mit einem elektronischen Steuergerät 34 verbunden, das eine bauliche Einheit mit dem Brennkraftmaschinen-Managementsteuergerät bildet oder eine Schnittstelle mit diesem aufweist.

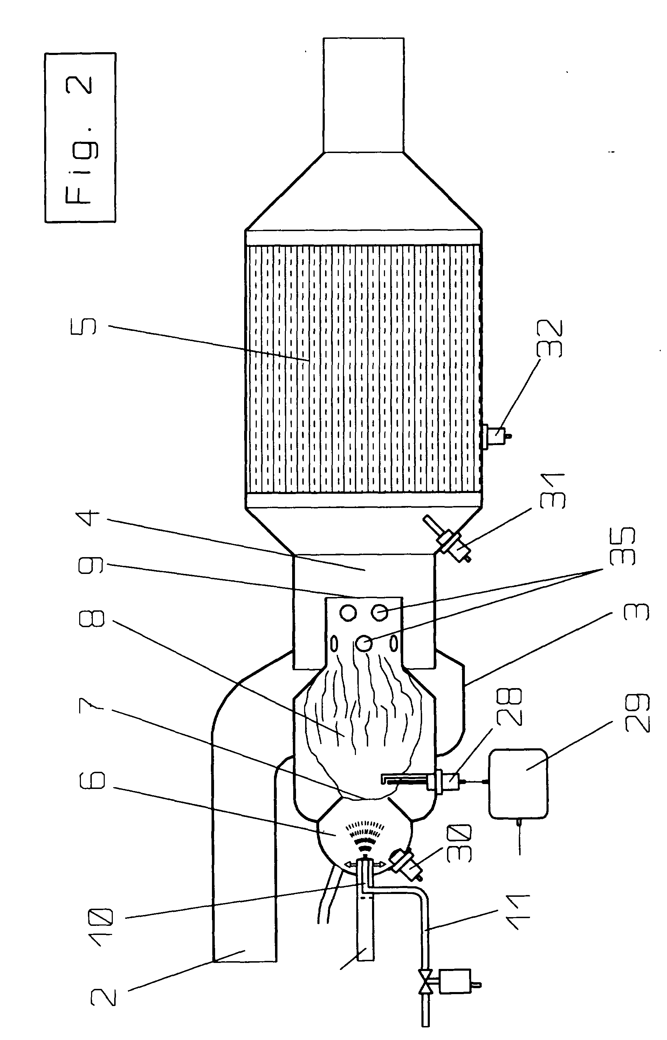

Eine luftgestützte Zerstäubung des Brennstoffes erfolgt, wie in Fig. 2 erkennbar, in der Gemisch-Aufbereitungskammer 6 durch den zentral an der Zerstäuberdüse 10 austretenden Teilstrom der Brennluft. Durch die mit Pfeilen dargestellte radial austretende Brennluft wird der um die Mittelachse zerstäubte Brennstoff (Sprühkegel) mit einem Luftmantel umgeben, wodurch die Entflammung mittels der Zündelektrode 28 und die Stabilität der Flamme in der Brennkammer 8 verbessert wird. Die Flamme beginnt im Bereich der Gemisch-Austrittsblende 7 und erstreckt sich bis in den Bereich des Brennkammeraustritts 9. Das durch die Abgasleitung 2 zuströmende Motor abgas darf sich erst im Bereich des Brennkammeraustritts 9 mit dem Abgas der Brennkammer 8 vermischen, da sonst die Verbrennung in der Brennkammer beeinträchtigt wird. Die Brennkammer ist deshalb so gestaltet, damit sie im Bereich der Flamme geschlossen und im Bereich des Brennkammeraustritts 9 einen verringerten Querschnitt aufweist. Die beiden Abgasströme treffen erst im Bereich der ausbrennenden Flamme bzw. von Durchtrittsbohrungen 35 aufeinander, wobei eine Vermischung der beiden Abgasströme im Bereich der Abgas-Mischstrecke 4 durch die Durchtrittsbohrungen 35 gefördert werden soll. Die Lambda-Sonde 31 ist stromab der Abgas-Mischstrecke 4 angeordnet, um die Zusammensetzung des Gesamtgemisches nach abgeschlossener Vermischung messen zu können.

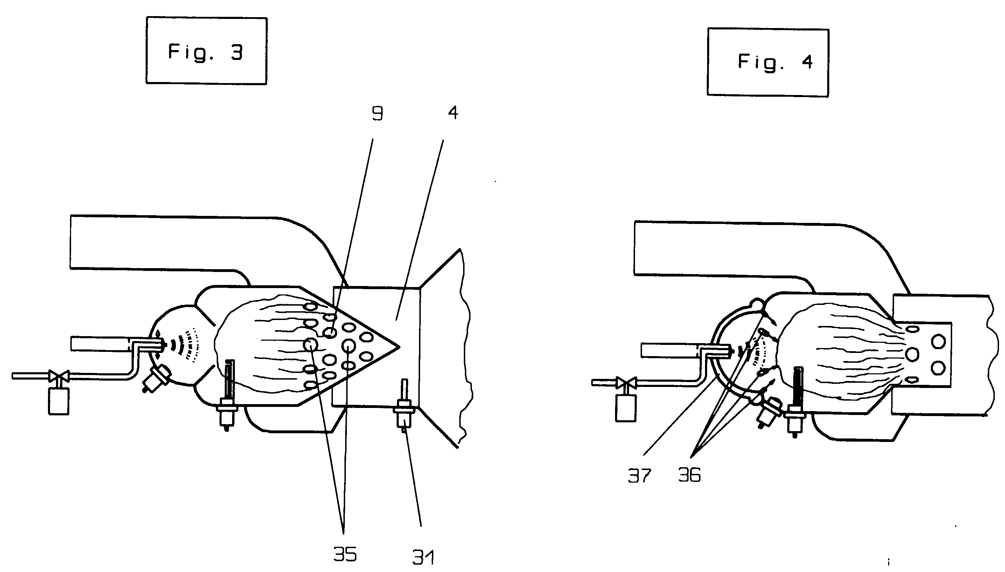

Fig. 3 zeigt eine abgewandelte Form des Brenners 3, bei welcher der Brennkammeraustritt 9 die Form eines Kegels hat und sich der freie Querschnitt durch die Summe der Durchtrittsbohrungen 35 ergibt. Hierbei kann durch die gewählte Anordnung der Durchtrittsbohrungen die Vermischung der beiden Abgasströme noch gezielter vorgenommen werden, wodurch es möglich wird, die Lambda-Sonde 31 im Bereich der Abgas-Mischstrecke 4 anzuordnen.

Fig. 4 zeigt eine abgewandelte Form des Brenners 3, bei welcher die Gemisch-Austrittsblende 7 zwischen der Gemisch-Aufbereitungskammer 6 und der Brennkammer 8 nach Fig. 1 - 3 durch eine Reihe von Brennluft-Austrittsröhrchen 36 ersetzt worden ist. Anstelle der radial austretenden Brennluft an der Zerstäuberdüse 10 nach Fig. 1 - 3 wird diese über Verbindungsleitungen 37 geführt und im Trennbereich der beiden Kammern über die Brennluft-Austrittsröhrchen 36 eingeblasen.

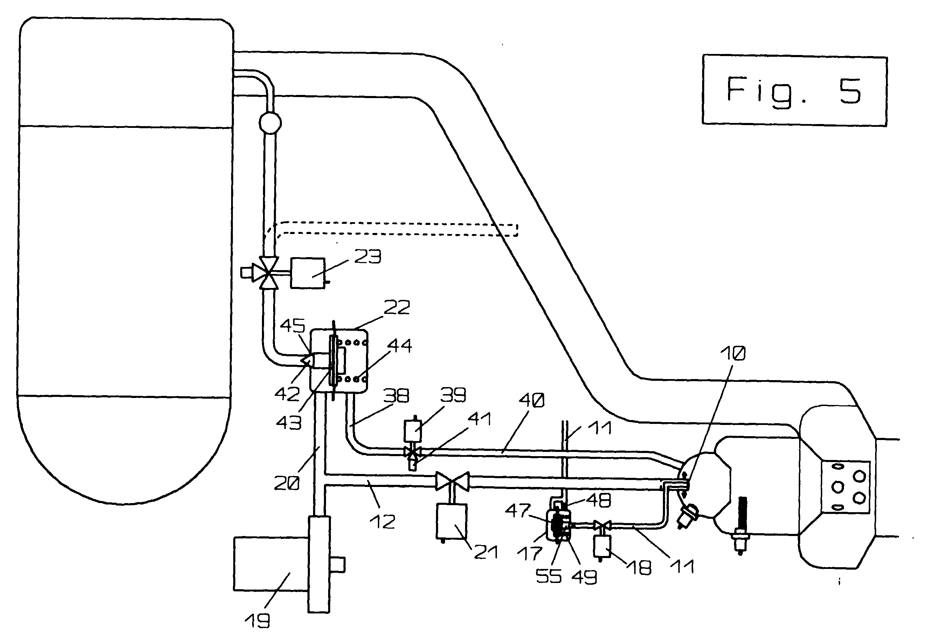

Fig. 5 zeigt ein für eine konstante Brennerleistung und kostantes Lambda konzipiertes Brennersystem. Das Sekundärluftgebläse 19 wird beim Einschalten der Zündung und nicht betriebswarmem Katalysator 5 in Betrieb gesetzt und fördert mit voller Leistung. Die Versorgung des Brenners 3 mit Brennluft ist nur so lange erforderlich, bis nach ca. 15 bis 20 Sekunden der vordere Teil des Katalysators 5 betriebswarm ist bzw. im Katalysator ein vorgegebener Temperaturschwellwert erreicht wird. Der Brenner 3 wird vorzugsweise im Mischungsverhältnis auf Lambda knapp über 1 eingestellt. Für konstante Brennerleistung und konstantes Lambda ist deshalb auch eine konstante Brennerluftmenge pro Zeiteinheit erforderlich. Da sich im Laufe der Betriebszeit die Förderkennlinie des Sekundärluftgebläses 19 verändern kann und die Fördermenge auch vom Abgasgegendruck abhängig ist, wird zur Vermeidung einer Brennluftmengen-Änderung der nachfolgend beschriebener Sekundärluft-Druckregler 22 benötigt, der in seinen Einzelteilen dargestellt ist.

Ein Ventilschließkörper 42 ist mit einer Membrane 43 verbunden und wird in Ruhestellung durch die Kraft einer Druckfeder 44 auf einen Ventilsitz 45 gedrückt. Bei Betrieb des Brenners wird das Brennluft-Absperrventil 21 geöffnet und die vom Sekundärluft-Gebläse 19 geförderte Luft zur Zerstäuberdüse 10 gefördert. Der konzentrische Austrittsspalt zur Zerstäubung des Brennstoffes und Bohrungen für die radial austretende Luft (nicht dargestellt) sind so bemessen, daß bei einem bestimmten Druck in der Brennluftleitung 12 genau die vom Brenner benötigte Luftmenge zugeteilt wird. Entsprechend diesem Druck, der auch gegen die Kraft der Druckfeder 44 auf die Membrane 43 wirkt, wird die Federkraft so bemessen, daß ab diesem Druck der Schließkörper 42 öffnet und die im Überschuß geförderte Luftmenge über den Ventilsitz 45 abströmt. Für den Fall, daß sich die Förderkennlinie des Sekundärluftgebläses 19 verändert hat, wirkt sich diese Veränderung nicht auf die zugeteilte Brennluftmenge aus, da durch die Funktion des Sekundärluft-Druckreglers 22 der Druck erhalten bleibt und sich nur die im Überschuß geförderte Menge ändert. Hierbei wurde zunächst vorausgesetzt, daß der Abgasgegendruck vernachlässigbar gering ist.

Im Bereich höherer Drehzahl und Last steigt der Abgasgegendruck jedoch auf Werte an, die zu einer Verringerung der Druckdifferenz an der Zerstäuberdüse 10 führen, wodurch sich auch die zugeteilte Brennluft verringert und der Lambda-Wert in Richtung fett verändert wird. Um diese Störgröße zu kompensieren, wird der Abgasgegendruck über die Abgasdruck-Leitung 40, das Referenzdruck-Umschaltventil 39 und die Referenzdruckleitung 38 in die Membrankammer des Sekundärluft-Druckreglers 22 geleitet, in welcher sich die Druckfeder 44 befindet.

Damit erhöht sich der eingeregelte Druck des Druckreglers um den Betrag des Abgasgegendruckes, wodurch gewährleistet wird, daß die Druckdifferenz an der Zerstäuberdüse 10 und damit auch die Brennluftmenge im gesamten Kennfeld der Brennkraftmaschine weitgehend konstant bleiben, vorausgesetzt, das Sekundärluftgebläse 19 ist in der Lage, die Brennluftmenge gegen den erhöhten Druck im Überschuß zu fördern. Die im Überschuß geförderte Sekundärluft wird in dem hier beschriebenen Beispiel nach Fig. 5 entweder über das Sekundärluft-Absperr- und Taktventil 23 dem Motorabgas der Einzelzylinder über die Einblasröhrchen 25 im Bereich der Auslaßventile zugeführt oder - wie gestrichelt dargestellt - über die Leitung 26 der Abgasleitung 2 (Sammelrohr) beigemischt. Im ersteren Fall kann die Sekundärluft im Bereich der Auslaßventile zur Verbrennung von CO und HC genutzt werden. Selbstverständlich ist es auch möglich, auf die Beimischung der im Überschuß geförderten Sekundärluft zum Abgas zu verzichten und diese nach dem Sekundärluft-Druckregler, wie bei der Ausführung nach Fig. 1 über die Austrittsleitung 27, in die Atmosphäre abzublasen.

Die Zuteilung der Sekundärluft dient während des Brennerbetriebes zur gleichmäßigeren Erwärmung des Katalysators. Durch die Zuführung von Luft in den Abgasstrom der Brennkraftmaschine wird durch die Senkung der Mischtemperatur in der Abgas-Mischstrecke 4 einerseits verhindert, daß die Stirnfläche des Katalysators auf der Einströmseite überhitzt wird und andererseits erreicht, daß durch die erhöhte Strömungsgeschwindigkeit die Erwärmung des Katalysators tiefer hineinreicht. Die Absenkung der Mischtemperatur vor dem Katalysator ist insbesondere dann von besonderer Wichtigkeit, wenn der Brenner durch eine Vorzugsschaltung zeitlich einige Sekunden vor dem Start der Brennkraftmaschine gestartet wird und daher noch kein Abgas von der Brennkraftmaschine anfällt. Diese Verfahrensweise ist im Hinblick auf eine Reduzierung der Abgasemissionen beim Motorstart von Vorteil.

Nach dem Erreichen der Katalysator-Betriebstemperatur wird der Brenner abgeschaltet. Hierzu werden das Brennluft-Absperrventil 21 und das Brennstoff-Absperrventil 18 geschlossen. Sofern die Brennkraftmaschine zu diesem Zeitpunkt mit Rücksicht auf ihr Betriebsverhalten bereits mit einem Gemisch von Lambda=1 betrieben werden kann, ist keine weitere Sekundärluftförderung erforderlich, da die Lambda=1-Regelung durch die Regelung der Einspritzmenge erfolgen kann.

Erfolgt der Motorstart bei niedrigeren Temperaturen, dann ist mit Rücksicht auf das Betriebsverhalten der Brennkraftmaschine in den ersten Minuten ein Gemisch von kleiner Lambda=1 erforderlich. Auch in diesem Falle ist es im Interesse niedriger Emissionen vorteilhaft, nach dem Erreichen der Betriebstemperatur des Katalysators mit der Lambda=1-Regelung zu beginnen.

Voraussetzung hierfür ist allerdings, daß auch die Lambda-Sonde 31 bereits ihre Betriebstemperatur erreicht hat und die Förderung von Sekundärluft über die Anwärmphase des Katalysators 5 hinaus mit dem Sekundärluftgebläse 19 aufrechterhalten wird. Die Zumessung der Sekundärluft wird hierbei durch Ansteuerung des Sekundärluft-Absperr- und Taktventils 23 von der Lambda-Regelung übernommen. Falls erforderlich, kann das Sekundärluft-Absperr- und Taktventil 23 auch als 2/3-Wege-Ventil ausgeführt werden (Umschaltung von Zumessen und Abblasen in die Atmosphäre), um damit die Zuteilung kleiner Sekundärluftmengen zu verbessern. Mit zunehmender Abmagerungsmöglichkeit der Brennkraftmaschine während des Warmlaufs muß die Sekundärluftmenge mittels der Lambda-Regelung fortlaufend zurückgenommen werden, bis das Motorabgas ohne Sekundärluftzugabe Lambda=1 erreicht. Danach kann das Sekundärluft-Gebläse 19 abgeschaltet und die Brennstoff zumessung für den Motor von Steuerung auf Lambda=1-Regelung umgeschaltet werden.

Die Brennstoffzuführung erfolgt bei Verwendung des Brennersystems zur schnellen Aufheizung von Katalysatoren, vorzugsweise durch die von der Kraftstoffverteilerleiste abzweigende Brennstoffleitung 11. Die Zumessung einer konstanten Brennstoffmenge erfolgt mittels des Brennstoffreglers 17, wie er in Fig. 5 in seinen Einzelheiten dargestellt ist. Der in der Brennstoffleitung 11 herrschende Druck wird in beide durch eine Membrane 47 geteilte Membrankammer des Brennstoffreglers 17 geleitet, wobei im Zufluß in die Membrankammer aus der Brennstoffleitung 11 eine Brennstoffdüse 48 und in dieser Membrankammer eine Druckfeder 49 angeordnet sind, welche in Öffnungsrichtung eines mit der Membran 47 fest verbundenen Schließkörpers 55 wirkt. Bei Betrieb (Brennstoff-Absperrventil 18 geöffnet) wird die Verbindung des Membranraums zur Brennstoffleitung 11 durch den Schließkörper 55 in dem Maße geschlossen, bis sich zwischen den Membranräumen und damit auch an der Brennstoffdüse 48 eine Druckdifferenz einstellt, deren Kraft genau im Gleichgewicht zur Druckfeder 49 steht. Abhängig von dieser Druckdifferenz und dem Querschnitt der Brennstoffdüse 48 stellt sich ein Brennstoffdurchsatz ein, der vom Brennstoffregler 17 über die Brennstoffleitung 11 und dem Brennstoff-Absperrventil 18 der Zerstäuberdüse zugeführt wird. Die vom Brennstoffregler zugemessene Menge ist in weiten Grenzen unabhängig vom Druck in der Brennstoffleitung 11 und vom Druck in der Gemisch-Aufbereitungskammer 6. Das Sicherheits-Absperrventil 16, als Einzelteil in Fig. 6 dargestellt, dient zur Vermeidung von unkontrolliertem Brennstoffaustritt für den Fall eines Defekts an der Brennstoffleitung 11 (Crash-Test). Für den Fall, daß der Brennstoffdurchfluß deutlich über dem Normalwert des Durchsatzes im Brennstoffreglers 17 ansteigt, entsteht an einem Schließkörper 50 aufgrund des engen freien Strömungsquerschnittes zum Gehäuse des Sicherheits-Absperrventils 16 eine Druckdifferenz, deren Kraft auf den Schließkörper 50 größer als die Kraft einer Ventilfeder 51 ist. Dadurch wird der Schließkörper 50 gegen die Kraft der Ventilfeder in Richtung eines Ventilsitzes 46 bewegt und verschließt diesen, wo durch der Durchfluß des Brennstoffes so lange unterbrochen wird, wie Überdruck in der Brennstoffleitung 11 stromauf des Sicherheitsabsperrventils 16 vorhanden ist.

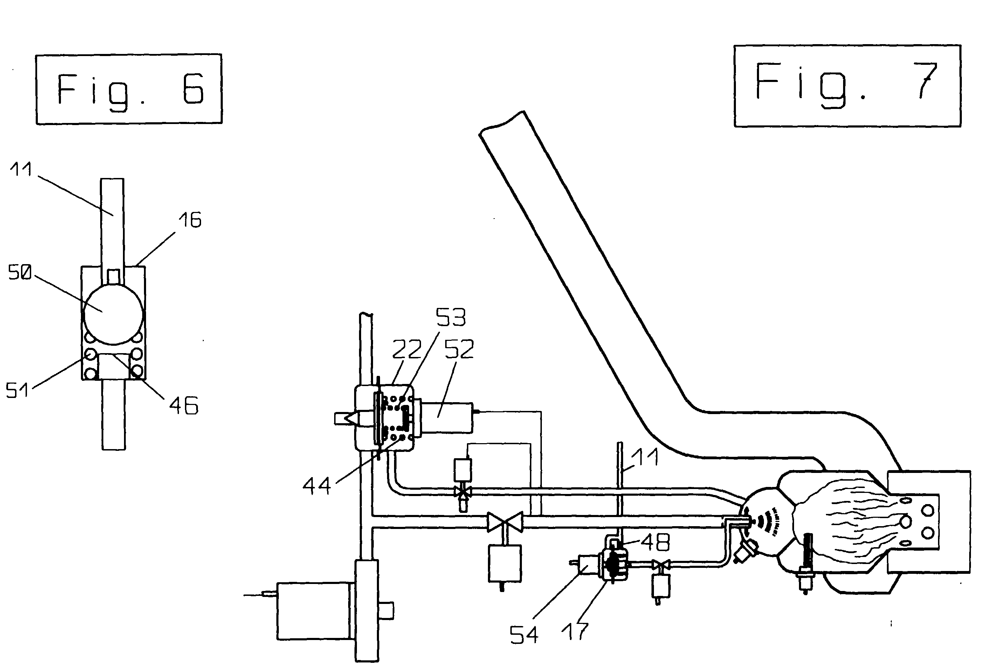

Fig. 7 zeigt eine Brennereinrichtung mit variabler Brennerleistung, die bei bestimmten Anwendungsfällen, wie zum Beispiel für eine Ansaugluftvorwärmung beim Kaltstart von Dieselmotoren oder für eine Regenerierung von Dieselrußfiltern durch Abbrennen gefordert wird und mit geringem Zusatzaufwand an den Systemkomponenten Brennstoffregler 17 und Sekundärluft-Druckregler 22 erreicht werden kann, wie nachfolgend beschrieben wird.

Die Brennluftmenge kann durch Variation des Sekundärluftdruckes verändert werden, indem beispielweise mit einem elektronisch ansteuerbaren Stellmotor 52 die Kraft der Druckfeder 44 direkt oder mittels einer Zusatzfeder 53 verändert wird.

Die Brennstoffmenge kann durch Variation der Druckdifferenz an der Brennstoffdüse 48 des Brennstoffreglers 17 beispielsweise mittels eines elektronisch ansteuerbaren Hubmagneten 54 verändert werden.

In Verbindung mit dem elektronischen Steuergerät 34 ist es mit der Einrichtung nach Fig. 7 möglich, sowohl die Brennerleistung wie auch das Mischungsverhältnis des Brenngemisches in der gewünschten Weise den jeweiligen Anforderungen anzupassen.

## Patentansprüche

1. Brennersystem zur Abgasentgiftung bzw. -reinigung einer Brennkraftmaschine, mit dem ein Katalysator, eine Filtereinrichtung zum Auffangen von Kohlenstoffpartikeln oder die Verbrennungsluft der Brennkraftmaschine durch den Brennstoff der Brennkraftmaschine beheizt wird, wobei diesem Brennersystem Verbrennungsluft bereitgestellt wird, die von einem Luftgebläse, insbesondere einem Sekundärluft-gebläse gefördert wird, wobei der Brennstoff über eine Brennstoffleitung entnommen wird, in dieser Brennstoffleitung ein Brennstoffregler angeordnet ist, in einer zwischen Luftgebläse und Brennersystem bestehenden Brennluftleitung ein Brennluft-Druckregler angeordnet ist, dieser über eine Referenzdruckleitung mit dem in einer Brennkammer des Brenners oder der Brennkraftmaschinen-Abgasleitung herrschenden Druck beaufschlagt ist, dadurch gekennzeichnet,daß der Brennstoff- und/oder der Brennluftdruckregler (17 und/oder 22) ein elektronisch ansteuerbares Weg/Kraft-Stellelement aufweisen, das über Steuersignale eines elektronischen Steuergerätes (34) abhängig von Betriebsparametern der Brennkraftmaschine oder des Brennersystems gesteuert wird.

2. Brennersystem nach Anspruch 1, dadurch gekennzeichnet, daß Brennstoff und Brennluft über eine Zerstäuberdüse (10) in eine Gemischaufbereitungskammer (6) gefördert wird und die Aufbereitungskammer (6) eine Austrittsblende (7) aufweist, in deren Bereich die Entflammung einsetzt und sich in eine Brennkammer (8) fortsetzt.

3. Brennersystem nach Anspruch 2, dadurch gekennzeichnet, daß die Brennkammer (8) einen Brennkammeraustritt (9) aufweist, der in eine Abgasmischstrecke (4) einmündet, in die die Brennkraftmaschinenabgase einmünden.

4. Brennersystem nach Anspruch 3, dadurch gekennzeichnet, daß der Brennkammeraustritt (9) Durchtrittsbohrungen (35) aufweist, die so angeordnet sind, daß eine gute Vermischung der Brenner- und Brennkraftmaschinenabgase erreicht wird.

5. Brennersystem nach einem der vorstehenden Ansprüche, dadurch gekennzeichnet, daß die Brennstoff- bzw. Brennstoffluftleitung ein Sicherheitsabsperrventil (16) und ein Brennstoffabsperrventil (18) bzw. ein Brennstoffluftabsperrventil (21) aufweist.

6. Brennersystem nach Anspruch 5, dadurch gekennzeichnet, daß der Brennkammeraustritt (9) eine kegelige Mantelfläche aufweist, in der die Durchtrittsbohrungen (35) bestehen und den freien Querschnitt durch die Summe der Durchtrittsbohrungen/Querschnitte bestimmen.

7. Brennersystem nach einem der Ansprüche 2 bis 6, dadurch gekennzeichnet, daß die Gemischaustrittsblende (7) durch eine Reihe von Brennluft-Austrittsrohren (36) gebildet wird, die über eine Ringleitung (37) mit der Brennluftleitung (40) verbunden sind.

8. Brennersystem nach einem der vorstehenden Ansprüche, dadurch gekennzeichnet, daß in Verbindung mit einer Sekundärlufteinblasung die Brennluftleitung (20) ein Sekundärluft-Absperr- und Taktventil (23) aufweist.

9. Brennersystem nach einem der vorstehenden Ansprüche, dadurch gekennzeichnet, daß das Brennersystem bei Einsatz als Katalysator- oder Verbrennungsluftheizer durch eine Vorzugsschaltung zeitlich einige Sekunden vor dem Start der Brennkraftmaschine gestartet wird.

10. Brennersystem nach einem der vorstehenden Ansprüche, dadurch gekennzeichnet, daß dieses für eine konstante oder variable Heizleistung ausgelegt ist.

## Claims

1. Burner system for exhaust gas detoxification or purification of an internal combustion engine, by means of which a catalytic converter, a filter device for collecting carbon particles, or the combustion air of the internal combustion engine is heated by the fuel of the internal combustion engine, this burner system being provided with combustion air which is delivered by an air blower, in particular a secondary air blower, the fuel being taken up via a fuel pipe, a fuel regulator being disposed in this fuel pipe, a combustion air pressure regulator being disposed in a combustion air pipe provided between the air blower and the burner system, and this pressure regulator being acted upon via a reference pressure line by the pressure prevailing in a combustion chamber of the burner or the internal combustion engine exhaust pipe, characterised in that the fuel and/or the combustion air pressure regulator (17 and/or 22) comprise(s) an electronically actuatable travel/force adjusting element which is controlled via control signals of an electronic control device (34) in accordance with operating parameters of the internal combustion engine or the burner system.

2. Burner system according to claim 1, characterised in that fuel and combustion air are delivered via an atomiser nozzle (10) into a mixture preparation chamber (6), and the preparation chamber (6) comprises an outlet diaphragm (7), in the region of which ignition commences and continues into a combustion chamber (8).

3. Burner system according to claim 2, characterised in that the combustion chamber (8) comprises a combustion chamber outlet (9) which opens into an exhaust gas mixing section (4) into which the internal combustion engine exhaust gases flow.

4. Burner system according to claim 3, characterised in that the combustion chamber outlet (9) comprises through-holes (35) which are disposed so as to enable the burner and internal combustion engine waste gases to mix well.

5. Burner system according to one of the preceding claims, characterised in that the fuel or fuel-air pipe comprises a safety shutoff valve (16), a fuel shutoff valve (18) and a fuel-air shutoff valve (21).

6. Burner system according to claim 5, characterised in that the combustion chamber outlet (9) has a conical surface area in which the through-holes (35) are provided and determine the free cross section through the sum of the through- holes/cross sections.

7. Burner system according to one of claims 2 to 6, characterised in that the mixture outlet diaphragm (7) is formed by a series of combustion air outlet pipes (36) which are connected to the combustion air pipe (40) via a circular pipe (37) .

8. Burner system according to one of the preceding claims, characterised in that the combustion air pipe (20) comprises a secondary air shutoff and time-controlled valve (23) in connection with the injection of secondary air.

9. Burner system according to one of the preceding claims, characterised in that, when used as a catalytic converter heater or combustion air heater, the burner system is started several seconds before the start of the internal combustion engine by a preferential circuit.

10. Burner system according to one of the preceding claims, characterised in that this is designed for a constant or variable heating capacity.

## Revendications

1. Système de brûleur pour la décontamination et/ou l'épuration des gaz d'échappement d'un moteur à combustion interne, avec lequel un catalyseur, un dispositif de filtration pour capter des particules de carbone, ou l'air comburant du moteur à combustion interne, sont chauffés par le combustible du moteur précité, de l'air comburant, refoulé par un ventilateur d'air, un ventilateur d'air secondaire en particulier, étant fourni à ce système de brûleur, le combustible étant prélevé par l'intermédiaire d'une conduite de combustible, un régulateur de combustible étant disposé dans cette conduite, et un régulateur de pression d'air comburant, alimenté par l'intermédiaire d'une conduite de pression de référence par la pression régnant dans une chambre de combustion du brûleur ou dans le tuyau d'échappement du moteur à combustion interne, étant disposé dans une conduite d'air comburant, prévue entre le ventilateur d'air et le système de brûleur, caractérisé en ce que le régulateur de pression de combustible et/ou d'air comburant (17 et/ou 22) présentent un élément de réglage course/force, attaquable électroniquement et commandé par le biais de signaux pilotes d'un appareil de commande électronique (34), en fonction des paramètres de service du moteur à combustion interne ou du système de brûleur.

2. Système de brûleur suivant la revendication 1, caractérisé en ce que le combustible et l'air comburant sont refoulés par l'intermédiaire d'un pulvérisateur (10) dans une chambre de préparation du mélange (6), la chambre de préparation (6) présentant un diaphragme de sortie (7), dans la zone duquel s'engage l'inflammation et se poursuit dans une chambre de combustion (8).

3. Système de brûleur suivant la revendication 2, caractérisé en ce que la chambre de combustion (8) présente une sortie (9), qui débouche dans une section de mélange des gaz d'échappement (4), dans laquelle débouchent les gaz d'échappement du moteur à combustion interne.

4. Système de brûleur suivant la revendication 3, caractérisé en ce que la sortie de la chambre de combustion (9) présente des orifices de passage (35), dont la disposition est telle qu'un mélange satisfaisant des gaz d'échappement du brûleur et du moteur à combustion interne est obtenu.

5. Système de brûleur suivant l'une des revendications précédentes, caractérisé en ce que la conduite de combustible et/ou la conduite d'air comburant présente une soupape de sûreté (16) et une soupape d'arrêt de combustible (18) et/ou une soupape d'arrêt d'air comburant (21).

6. Système de brûleur suivant la revendication 5, caractérisé en ce que la sortie de la chambre de combustion (9) présente une surface d'enveloppe conique, dans laquelle les orifices de passage (35) sont prévus et déterminent la section transversale libre, par la somme des orifices de passage/sections transversales.

7. Système de brûleur suivant l'une des revendications 2 à 6, caractérisé en ce que le diaphragme de sortie du mélange (7) est formé par une série de tubes de sortie (36) d'air comburant, reliés par une conduite annulaire (37) à la conduite d'air comburant (40).

8. Système de brûleur suivant l'une des revendications précédentes, caractérisé en ce que, en liaison avec une injection d'air secondaire, la conduite d'air comburants (20) présente une soupape d'alimentation périodique et d'arrêt d'air secondaire (23).

9. Système de brûleur suivant l'une des revendications précédentes, caractérisé en ce que ce système, lors de son utilisation comme dispositif de chauffage de catalyseur ou d'air comburant, est mis en marche par un circuit prioritaire quelques secondes avant le démarrage du moteur à combustion interne.

10. Système de brûleur suivant l'une des revendications précédentes, caractérisé en ce qu'il est conçu pour une puissance calorifique constante ou variable.
